# EUROPEAN PATENT APPLICATION

(11) **EP 1 383 329 A2**
(43) Date of publication of application: **21.01.2004**
(21) Application number: 03023315.9
(22) Date of filing: 19.07.1999
(51) Int. Cl.: H04N 7/173

(54) **Method and apparatus for data communication**

(30) Priority: 20.07.1998 SE 9802580
(62) Divisional of application: 99941934.4
(71) Applicant: Macab AB, 231 66 Trelleborg (SE)
(72) Inventor: The designation of the inventor has not yet been filed
(74) Representative: Herbjörnsen, Rut

(57) **Abstract**

A method and an apparatus for data communication is disclosed in which a cable-TV network is used for providing data network access at a relatively low cost, especially for home use.

For the in-house network a baseband data signal, for example, according to the Ethernet protocol, is combined with the cable-TV signals using filters, and distributed to one ore more flats. Preferably passive filters are used. Outgoing data is transmitted along the same path in the opposite direction. The baseband data signal may also comprise a telephony signal, combined with the data signal without modulation.

For external communication a separate data network may be built, a conventional cable-TV modem solution may be used, or a baseband data signal may be combined with a cable-TV network using filters, in the inventive way.

## Description

### Technical Field

The present invention relates to signal transmission and in particular to the transmission of a combined signal comprising subsignals according to two or more different protocols on the same wire.

### Description of Related Art

A major obstacle for new telephony operators is providing the last mile to the consumer. New cabling is expensive and therefore alternatives to dedicated telephony wires all the way to the subscriber are being explored.

For cost reasons new cables are usually only installed when another cable, for example, Community Antenna Television (CATV - often called cable TV for simplicity) is being installed.

CATV modems are now being introduced world-wide for providing Internet access. One possibility for providing telephony is to attach an Internet Protocol (IP) telephony box to the CATV modem. Solutions where the IP telephony box is integrated into the CATV modem are also being developed. WO98/57456 A1 describes a solution in which an Ethernet signal and a telephone signal are modulated onto the same cable.

Radio access to a single subscriber is also a possibility that is being explored commercially.

All the solutions described above are relatively expensive. New cabling in old buildings is often quite costly. For the other alternatives (modulation onto the same cable, CATV modems and radio access) the subscriber must get a new device performing the new function. This box needs maintenance, which adds to the cost.

Furthermore, the device needs power and therefore will not work in the case of a power failure.

There is an increasing requirement for Internet connections from people's homes, both to enable working at home and for private use. A common solution is using modems and the ordinary telephone lines. This solution has two severe drawbacks: the telephone line is busy for the whole duration of the connection and the bandwidth is very low.

It is known in the art to use a cable-TV (CATV) network for the connection from a building to the external data network. TV signals and data, for example according to the Ethernet protocol, can share a transmission medium, since the TV signals and the data signals are transmitted on different frequencies and can therefore easily be separated. Each subscriber then has a CATV modem, which extracts the data signal and forwards it to the subscriber's computer.

Several prior art documents relate to the use of CATV networks for transmission of various types of data signals.
For example, WO-A-97/32411 combines ATM data signals and CATV signals by use of modulation. The ATM signal is modulated onto a carrier "within the CATV broadcast RF frequency spectrum"

US-A-5 539 880 relates to two-way communication in a CATV network for interconnecting multimedia workstation. Each workstation comprises a modulator and a demodulator. A signal splitter is used at each workstation for selecting the part of the complete signal transmitted in the network that is intended for its particular workstation. Demodulation is performed in the workstation. Similarly, signals are modulated before they are transmitted.

US-A-5 608 446 discloses a method of transmitting high-speed data, in particular Ethernet data, on a CATV cable, by imposing the data signal on an RF carrier, i.e. modulation. The user equipment includes a home controller, which demodulates the RF channel to extract the Ethernet packets. US-A-5 448 412, too, is concerned with transmission of data that is first modulated onto an RF channel. Also, upstream communication takes place in a separate network. Thus, in addition to requiring modulation, this document does not enable two-way communication in a CATV network. WO-A-97/21288 deals solely with transmission of data in a CATV network using modem link. WO-A-93/05593 relates to TV broadcast of digital data which is first modulated.

All of the prior art documents discussed above relate to transmission of data signals in a CATV network using modulation to combine the data signal and the CATV network. The use of modulators has a number of disadvantages: they are expensive and complex and therefore difficult to maintain. Further, they are active components, which require a power supply.

CATV modems are relatively expensive. Also, the subscriber effectively shares the bandwidth of the in-house network with all the other subscribers in the house, since all data is transported to everybody and the selection of relevant data is made in each subscriber's CATV modem or computer.

Another solution known in the art is to build a separate new network for data communication, not using any part of the CATV network. For an office environment this is the standard solution. For residential access the wiring cost may be prohibitively high.

In the Canadian Patent 1 252 169 a system combining CATV signals and unmodulated data signals is described. The system, primarily designed for hospital use, is designed in such a way that it offers a fairly low data bandwidth, sufficient for transmitting information about the menu, and from climate control and other sensors. It could not be used for data communications according to local area network standards used today, such as Ethernet, since it does not cater properly for the impedance requirements when the data signal is tapped. Also, it appears that amplifiers are needed along the transmission path in the Canadian system.

### Object of the Invention

It is an object of the present invention to provide an apparatus for the relatively inexpensive connection to a data network, especially the Internet.
It is also an object of the present invention to provide wired subscriber telephone and data connections at a reduced cost.

### Summary of the Invention

The object is achieved by an apparatus for the combination and/or splitting of CATV signals and data signals, said apparatus comprising a first terminal adapted to receive a CATV signal, a second input/output terminal adapted to receive and transmit a Ethernet signal and a third input/output terminal adapted to receive and transmit a combined signal comprising a CATV signal and a baseband Ethernet signal, a high-pass filter on the first input/output terminal, a low-pass filter on the second input/output terminal and a combining unit connected to the high-pass filter, the low-pass filter and the third input/output terminal.

The incoming Ethernet signal may be a baseband Ethernet signal combined with the CATV signal by means of filters and incoming on the CATV cable. Alternatively, the incoming Ethernet signal may share an incoming cable with the TV signal, and the Ethernet signal and the TV signal are demodulated in a CATV modem before the combination of the signals.

In an advantageous embodiment, the baseband Ethernet signal is combined from an Ethernet subsignal and a telephony subsignal.

The apparatus may further comprise an impedance converting unit connected between the second input/output terminal and the low-pass filter.

To balance differences in impedance between the terminals, the signalling device preferably also comprises a balun connected between the second input/output terminal and the low-pass filter.

Preferably, the cut-off frequencies of the filters are substantially between 30 and 40 MHz. For 100 Mbit/s Ethernet a suitable cut-off frequency is 50-60 MHz.

In a preferred embodiment the impedance on the first input/output terminal is substantially 75Ω and the impedance on the second input/output terminal is substantially 50Ω.

According to a preferred embodiment, the filters used are passive filters. This solution enables the use of inexpensive passive components to split/combine the signal, since the baseband data signal is used.

Preferably the apparatus is adapted for bidirectional traffic.

The Ethernet standards used today in practice only use the frequencies higher than 100kHz.

An ordinary telephone signal uses the frequency range from 0-4 kHz. An ISDN telephone signal uses the frequency range from 0-80 kHz. Thus, either an ordinary telephone signal or an ISDN signal can be combined with an Ethernet signal without the need for active components such as modulators.

According to the invention the data can be distributed using existing resources, that is, cables already present, which means that the network can be implemented in an inexpensive way. The method and apparatus according to the invention also makes it fairly inexpensive to add new users to the data network.

For example, in a star-shaped network, an Ethernet hub may be used to transmit all data to all flats, and the selection of data intended for a particular computer is carried out in the computer.

Alternatively a switch may be used to distribute the data, in which case only the data intended for the computer or computers connected in the same chain is transmitted to each computer.
In this way, the users do not have to share the same bandwidth, which means that each user can effectively use the entire bandwidth available for data communication.

In a preferred embodiment, the incoming data signal shares an incoming cable with the TV signal, and the data signal and the TV signal are demodulated in a CATV modem before the combination of the signals.

### Brief Description of the Drawings

The invention will be described in more detail in the following, with reference to the drawings, in which:
Figures 1A and 1B show two basic configurations of a CATV network;
Figure 2 is a schematic representation of a first preferred embodiment of the invention;
Figure 3 is a schematic representation of a second preferred embodiment of the invention;
Figures 4 is a schematic representation of a third preferred embodiment of the invention;
Figure 5 shows a splitting/combining device according to an embodiment of the invention;
Figures 6A and 6B show technical implementations for flats in which there are more than one television outlet.
Figure 7 is a schematic representation of a fourth preferred embodiment;
Figure 8 shows a receiving device used in the fourth preferred embodiment;
Figure 9 shows a device for combining an Ethernet signal and a telephony signal;
Figure 10 shows a device for combining a combined Ethernet and telephony signal and a CATV signal.

### Detailed Description of Embodiments

Figure 1A shows conventional star connected CATV network. A CATV amplifier 1 receives the TV signal, which is typically distributed from the amplifier 1 to all flats in a house. To each television set 3 in the house, or to each flat, there is a separate cable.

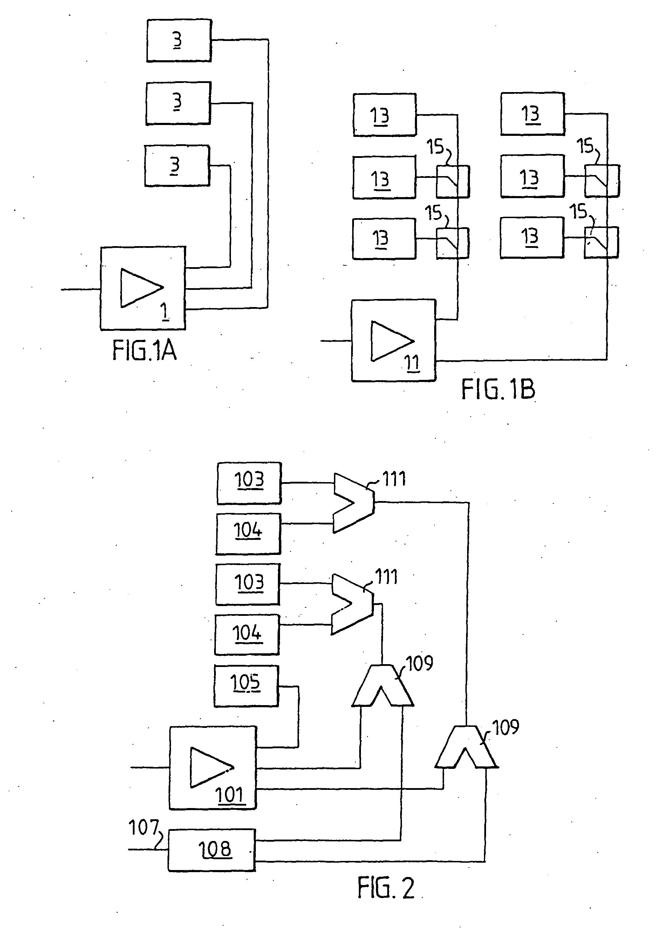

Figure 1B shows a conventional cascade connected CATV network. As before, a CATV amplifier 11 receives the TV signal, which is typically distributed from the amplifier 11 to all flats in a house. Several television sets 13 are connected to the amplifier 11 by the same cable. For each television set 13 there is a receiving unit 15 splitting the power from the amplifier so that each flat gets its share.

Of course, combinations of the two configurations shown in Figures 1A and 1B are possible.

Figure 2 shows a basic embodiment of the invention based on a star configuration network like the one shown in figure 1A. As before, a CATV amplifier 101 is used for receiving the TV signal. From the amplifier 101 the TV signal is distributed to a number of flats comprising television sets 103 and personal computers 104, through a separate cable for each flat. The TV signal may also be distributed to flats in which there is only one or more television sets 105.

In this embodiment an external data network 107 is used for the data communication outside the house. The incoming data from the data network 107 is distributed, in a distribution device 108 to each flat by the in-house CATV network. The distributing device 108 may be a hub or a switch, which distributes the incoming data to each subscriber to a separate connection. A hub simply divides the signal into a number of identical signals, so that the same data signal is distributed to all subscribers. If a switch is used, the data signal for each subscriber may be transmitted only to this subscriber. In this way, each subscriber can use the full bandwidth of the transmission cable for his own data.

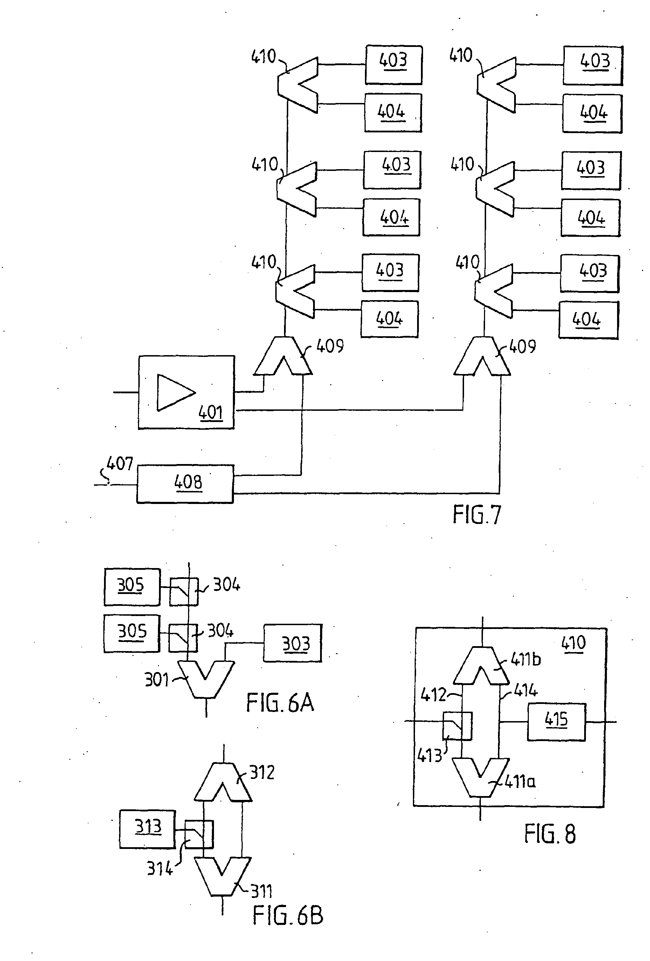

To enable the distribution of data signals through the CATV network, a splitting/combining device 109 is added to each of the cables connecting the amplifier 101 to the television sets 103. Other flats 105 do not have access to the data network 107, and are connected directly to the amplifier 101 in the conventional way. The splitting/combining device 109 receives both the data signals from the data network 107 and the TV signals from the receiving unit 101, combines them to one signal and outputs a signal comprising the data signal and the TV signal. In the opposite direction, the splitting/combining device receives a signal comprising the data signal. The splitting/combining device will be discussed in more detail in connection with Figure 5.

In each flat a similar splitting/combining device 111 is provided. The splitting/combining devices 109, 111 perform the same functions, but their design may vary. For example it may be feasible to include several of the splitting/combining devices 109 connected directly to the amplifier 101 and the data network 107 in one unit. The splitting/combining devices 111 at the subscribers' end could be incorporated in an existing device, such as the antenna outlet. Each computer therefore receives all data. According to, for example, the Ethernet protocol, each computer is adapted to extract the information it wants from a data flow.

The external data connection into the building, that is before the distributing device 108, may be omitted, and if present, may be provided in any way known in the art.

In Figure 2, a separate data network is shown, that is, the data comes into the building through a separate cable 107.

If there is no external data connection the CATV network may be used for internal communication within the building.

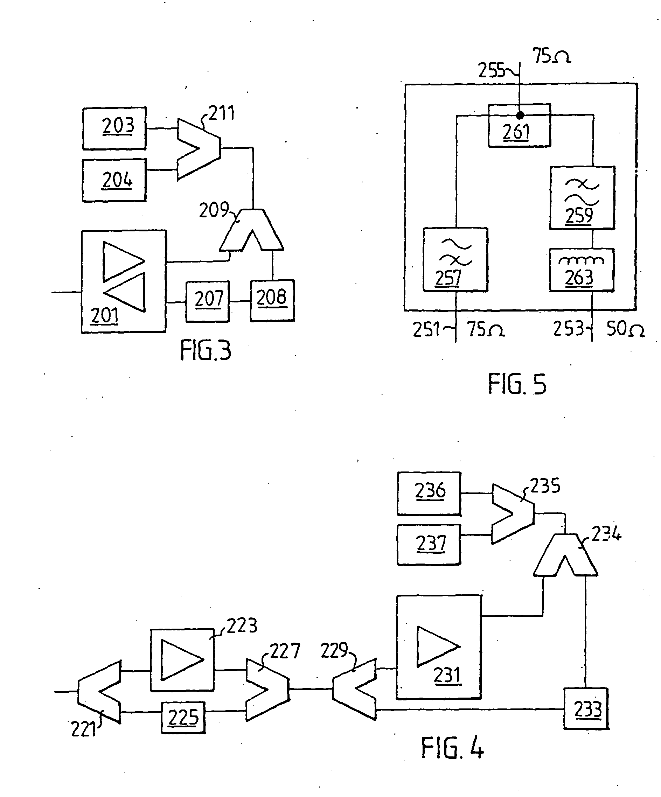

Figure 3 shows a second way of implementing the external data communication using CATV modems. The data signal and the TV signal are received on the same connection by a bi-directional amplifier 201, in a way well known in the art. From the amplifier 201 the TV signal only is distributed to a number of flats (for simplicity only one is shown) comprising television sets 203 and personal computers 204, through a separate cable for each flat.

A CATV modem 207 also receives the output signal from the CATV amplifier. Other configurations are of course possible. The CATV modem 207 extracts the data signal from the combined signal and forwards this signal to a distributing device 208. The distributing device 208 may be a hub or a switch, which distributes the incoming data to each subscriber to a separate connection. The data on each of these connections is then distributed to the appropriate flat. To achieve this, a splitting/combining device 209 like the one shown in Figure 2 is used to combine the signal on each of the cables connecting the amplifier 201 to the television sets 203 with the appropriate data signal from the distributing device 208. In each apartment a similar splitting/combining device 211 is provided for separating the received data signal and TV signal.

In the opposite direction, the data signal originates in the personal computer 204, goes through the splitting/combining devices 211 and 209 to the distributing device 208. From there the signal may go back through the CATV modem 207, and after the modulation (typically between 5 and 25 MHz) in the reverse direction the data is transmitted to the external network through the amplifier 201.

A third way of implementing the external data connection would be to combine the data and the CATV signal using passive components according to the invention. In this case, a splitting/combining device 109, 111 could be used for combining the signals.

One configuration enabling this is shown in Figure 4. To the left in the figure a part of an external connection is shown. An incoming signal to a splitting/combining device 221 is assumed to comprise a baseband data signal and a CATV signal combined together by a passive component, like the one discussed in more detail in connection with Figure 5. At certain maximum distances along the path, repeaters are needed, which preferably involve a separation of the two signals. Each repeater is implemented in the following way: The incoming signal is split into the CATV signal and the baseband data signal in the splitting/combining device 221. The CATV signal is fed to a CATV amplifier 223 and the data signal is fed to a distributing device 225, which is probably a repeater but may also be a switch or a hub. The output signals from the CATV amplifier 223 and the distributing device 225 are combined again in a splitting/combining device 225.

Before the signal is fed to a CATV amplifier 231, it is split into the CATV signal and the data signal in a splitting/combining device 229. The CATV signal is fed to the CATV amplifier and the data signal is fed to a distributing device 233, preferably a switch. The output signal from the switch, for each flat, is combined again with the CATV signal, in a splitting/combining device 234 and the combined signal is passed on to each flat, in which a splitting/combining device 235 separates the signals and feeds the TV signal to a television set 236 and the data signal to a computer 237.

Figure 5 shows a preferred embodiment of the splitting/combining device 109, 111, 209, 211. The splitting/combining device has a first terminal 251 for receiving the TV signal, a second terminal 253 for receiving and transmitting the data signal, and a third terminal 255 for receiving and transmitting the combined signal. The data signal is received either from the distributing device 108, 208 or from a subscriber's computer. The TV signal is received from the CATV amplifier 101, 201. The combined signal is transmitted on the in-house CATV network.

Cable television channels are usually transmitted on frequencies higher than 47MHz. Data signals are usually transmitted using frequencies lower than 30MHz. On the first terminal 251, therefore, a high-pass filter 257 is placed to filter out the data signals and pass on the TV signal. On the second terminal 253 a low-pass filter 259 is placed to filter out the television signal and pass on the data signal. The filters 257, 259 are connected to a splitting/combining unit 261 in which the two signals are combined.

The impedance on the three connections usually differ. On the first 251 and third 255 terminal the impedance is usually 75Ω. On the second terminal the impedance is usually 50Ω. To solve this problem an impedance converter 263 may be used. This is, however optional, since the impedance difference usually will not cause significant problems.

In the split/combining devices 111, 211, at the subscriber end the first terminal 251 is connected to the subscriber's television set. The second terminal 253 is connected to the subscriber's computer, and the third terminal 257 is connected to the corresponding third terminal 257 of the split/combining devices 109, 209 at the other end.

The first terminal 251 of these splitting/combining devices 109, 209 is connected to the CATV amplifier 101, 201. The second terminal 253 is connected to the distributing device 108, 208.

Figures 6A and 6B show technical implementations for flats in which there are more than one television outlet. In Figure 6A the television outlet is assumed to be after the data outlet as seen from the CATV source signal. A splitting device 301 receives the combined data and television signal, which is branched in the splitting device into a connection carrying the data signal to the computer 303 and a television signal which may be branched in one or more branching units 304 to one or more television sets 305. In Figure 6B the television outlet is assumed to be before the data outlet. A first splitting/combining device 311 receives the combined data and television signal and splits the signal into a data signal which is fed directly to a second splitting/combining device 312, but is also branched in a branching unit 314 to one or more television sets 313.

So far the discussion has been focused on the 10BASE-2 Ethernet protocol. If another Ethernet protocol, for example, 10BASE-T is used, instead of the impedance converter 263 an adapter and a balun must be included in the splitting/combining device.

Figure 7 shows a preferred embodiment of the invention applied to a cascade coupled network like the one shown in Figure 1B. for the data into the house. As before, a CATV amplifier 401 is used for receiving the TV signal. From the amplifier 401 the TV signal is distributed to a number of flats, each having a television set 403 and a personal computer 404.

As in the embodiment shown in Figure 2, a separate data network 407 is used for the data communication outside the house. The incoming data from the data network 407 is distributed, in a distribution device 408, to each flat by the in-house CATV network. The distributing device 408 may be a hub which simply distributes the same signal on a number of outputs, or a switch, which switches the incoming data so that only the data intended for the subscribers connected to a particular cascade is transmitted on this cascade. In Figure 7, two cascades are shown. Only one, or an arbitrary number may be used.

To enable the distribution of data signals through the CATV network, a splitting/combining device 409 is added to each of the cables connecting the amplifier 401 to the television sets 403. Normally there will be several splitting/combining devices 409, each connected separately to the CATV amplifier and to the distributing device 408. A receiving unit 410 is used in each flat to receive the combined signal, split it into a data signal and a TV signal, distribute the signals to the television set and the computer, respectively, combine the signal back together and pass it on to the next flat. Because of the cascade configuration, in practice, the same signal, comprising data and television signals is distributed to all the flats. If data communication is not desired in one or more flats, the receiving unit 410 may be simplified as described below.

The receiving unit 410 in each flat receives the combined signal comprising both the data signals from the data network 407 and the TV signals from the receiving unit 401, combines them to one signal and outputs a signal comprising both the data signals and the TV signals. In the opposite direction, the splitting/combining device receives a signal comprising both the data signal and the TV signal and splits them into two separate signals. The splitting/combining device is identical to the one discussed in connection with Figure 5.

As for the star-shaped configuration, the data connection 407 may be omitted, or may be provided in any way known in the art. Several different embodiments of the data connection were discussed in connection with Figures 2, 3, 4a and 4b.

In the receiving unit 410 is shown in Figure 8 two splitting/combining devices 411 a, 411 b like the ones shown in Figure 5 are provided. In the receive direction, one of the splitting/combining devices 411a splits the received signal into a data signal and a television signal. The television signal is transmitted through a cable 412 to the other splitting/combining device 411 b, a branching unit 413 on said cable 412 branching the signal to the television set. The data signal is transmitted through a data cable 414 to a transceiver 415 and from the transceiver to the other splitting/combining device 411b. The transceiver has a high input impedance and does not load the cable. Therefore, to work properly, it must be placed just a few centimetres from the cable. The transceiver is an active component and needs external power, which it normally gets from the computer using an AUI interface. From the transceiver 415, the data connection is also branched to an AUI Ethernet card in a computer (not shown).

In the last flat in the cascade requesting data communication, that is, at the end of the cable, the second splitting/combining device is not needed. Instead, a terminating device is needed to terminate the data signal. For flats after the last flat requesting data communication an ordinary cascade TV network may be used, since the data signal is not recombined in the last flat requesting data communication.

If data communication is not desired in one or more flats, the splitting/combining devices 411a, 411b are still needed for all flats between the amplifier 401 and flats that are to be able to receive data. Therefore, receiving unit like the one 410 shown in Figure 8 but without the transceiver 415 may be installed. In this way, if data communication should be enabled at a later stage, a transceiver would have to be installed. Alternatively, a complete receiving unit 410 could be installed and the data outlet from the transceiver be blocked. A solution enabling the remote activation and deactivation of the data outlets is of course convenient. This may be done using Ethernet control packets, in which case additional hardware would be needed in the flats to inspect the control packets.

In an alternative embodiment the transceiver 415 in Figure 8 could be replaced by a repeater or a small hub or switch. Hubs enabling both 10BASE-2 and 10BASE-T are known in the art. The 10BASE-T end of such a hub could be connected to the external computer, while the 10BASE-2 end could be connected to the internal coaxial cable 414. As 10BASE-T is much more common than 10BASE-2 this solution may be more advantageous. The distributing unit (repeater or hub or switch) needs a power supply, but even if one distributing unit loses power the system will still work for the other flats. This is also valid if transceivers are used, as described above.

For practical reasons the distributing units, that is, hubs or switches in the flats should get their power from the CATV cable. To achieve this a direct current, or low-frequency alternating current may be fed to the distributing units together with the data and TV signals. A three-way filter is then used to separate the data signal, the TV signal and the power. A similar three-way filter is also used to recombine the signals for the outgoing CATV cable.

Instead of a transceiver, 10BASE-T hubs or switches could be used in the system. The outlet from the Ethernet hub or switch next to the CATV amplifier would then have to be fitted with baluns to convert from twisted pair cables to coaxial cables. Baluns must in this case also be used for each hub in each flat. This configuration is much more sensitive to power failure, in that if one hub stops working it will disconnect the rest of the network. Therefore, the power supply of the hubs should be from the CATV cable. There is also a limit to the number of hubs that can be cascade connected. If switches are used, there is no such limit.

Of course, since according to the Ethernet protocol a computer is able to select which cells to receive and which ones to discard, more than one computer outlet could also be included in each flat, either between the same to splitting/combining devices or with the use of more than one pair of splitting/combining devices.

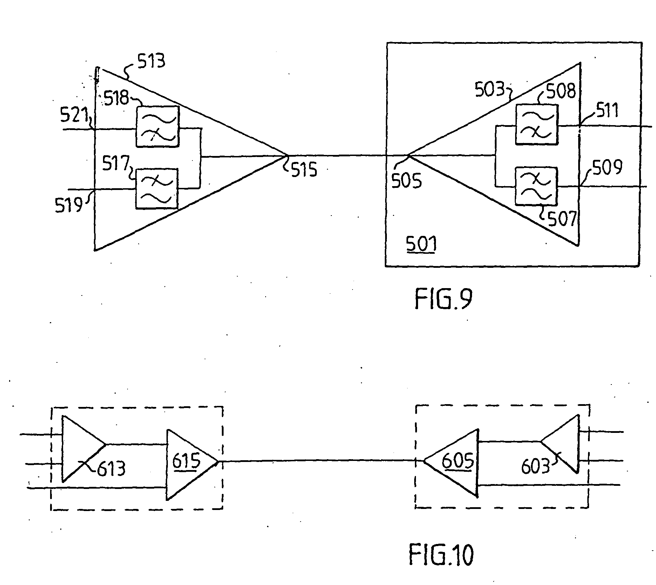

The splitting/combining device can be used to an even greater advantage if, a combined Ethernet and telephony signal is applied instead of a pure Ethernet signal. An apparatus for combining an Ethernet signal and a telephony signal is shown in Figure 9.

Figure 9 shows part of a telecommunications network comprising the last part of the connection to a subscriber, that is, the cable that is dedicated to one particular subscriber.

At the subscriber's site 501 there is a first filter device 503 according to the invention, adapted to receive, on a combined signal terminal 505 a combined signal from the network, said combined signal comprising a telephony subsignal and an Ethernet subsignal. The filter device 503 comprises a low-pass filter 507, and a high-pass filter 8. The low-pass filter 507 receives the combined signal from the combined signal terminal 505 and filters out the telephony subsignal, which is passed to a first subsignal terminal 509. The high-pass filter 8 receives the combined signal from the combined signal terminal and filters out the Ethernet subsignal, which is transmitted from the high-pass filter device to a second subsignal terminal 511. Through the first and second subsignal terminals, 509 and 511, respectively, the filter device 503 is also adapted to receive a telephony signal and an Ethernet signal, respectively, from the subscriber. The subsignals received from the subscriber are combined in the filter device 503 to a combined signal, which is transmitted through the combined signal terminal 505 of the filter device 503 to the network.

In the network, typically connected to an Ethernet switch a second filter device 513, like the filter device 503 at the subscriber's site, is located. The filter device 513 comprises a combined signal terminal 515 for receiving a combined signal from the subscriber 501 and dividing the combined signal into subsignals, and for transmitting a combined signal to the subscriber 501. The filter device 513 also comprises a third subsignal terminal 519, for receiving a telephony subsignal from the telephone network and a fourth subsignal terminal 521 for receiving an Ethernet signal from the network. The subsignal terminals 519, 521 are also used to transmit the respective subsignal derived from the combined signal received from the subscriber, to the appropriate network. It should be noted that the filter devices 503 and 513 perform the same functions, only in different places in the network, and therefore can be identical.

The telephony subsignal may be any Public Switched Telephone Network (PSTN) standard, such as POTS, which uses frequencies up to 4kHz, or ISDN, which uses frequencies up to 80kHz, or indeed any other type of signal in the frequency range 0-100kHz. A POTS signal has a maximum frequency of approximately 4kHz, and an ISDN signal has a maximum frequency of approximately 80 kHz. The filter device 507, 517 should split the signal between the maximum frequency of the telephony signal and the effective minimum frequency of the Ethernet signal, that is, 100 kHz.

The Ethernet subsignal may be any type of Ethernet signal that does not use the lower frequencies, such as 10Mb/s Ethernet, e.g. 10BASE-T, 10BASE-2 or 10BASE-5, or 100Mb/s Ethernet, e.g. 100BASE-TX.

The telephone signals received on the telephony subsignal terminal 509, 519 is received on a twisted pair cable. The data signals received on the Ethernet subsignal terminal 511, 521 are received on two (or four) twisted pairs or a coaxial cable, depending on the standard used. The connection between the two devices 503, 513 may a coaxial cable or a twisted pair. To balance the impedances between the terminals, baluns, as known in the art may have to be used on the telephony subsignal terminal 509, 519, on the Ethernet subsignal terminal 511, 521, or both.

If the cable between the two devices 503, 513 is a coaxial cable, the telephony signal needs to be rebalanced with a balun connected to the telephony subsignal terminal 509, 519. For 10BASE-2 and 10BASE-5 Ethernet, no balun will be needed for the Ethernet subsignal terminal 511, 521. For 10BASE-T and 100BASE-TX a balun must also be fitted to the Ethernet subsignal terminal 511, 521. The balun for the Ethernet subsignal terminal 511, 521 both balances the impedance and converts from traffic 2 twisted pairs to one pair, which may be a coaxial cable.

If the cable between the devices 503, 513 is a CAT5 twisted pair cable, no balun is needed on the telephone subsignal terminal 509, 519. For 10BASE-2 and 10BASE-5, which use coaxial cable, the Ethernet subsignal is first rebalanced using a balun connected to the Ethernet subsignal terminal 511, 521. For 10BASE-T and 100BASE-TX, which use two pairs in a CAT5 cable, only one pair is filtered and combined with the telephony signal.

Typically, the connection shown combine the signals received from an Ethernet network and a telephone network in the second filter device 513 and transmit the combined signal to a subscriber's site, where the signal is split in the first filter device 503. It would, however be possible for both filter devices 503, 513 to serve subscribers, or for both filter devices 503, 513 to serve networks.

Figure 10 shows a particularly favourable application of the invention, in which a filter device 603 as shown in Figure 9 is provided at the subscriber's site and another filter device 613 as shown in Figure 9 is provided in the network, preferably near the Ethernet switch. In this application the combined Ethernet and telephony signal output from the respective filter device 603, 613 is in turn combined with another signal, such as a CATV signal, in a CATV/Ethernet filter device 605, 615, respectively. The CATV/Ethernet filter devices are similar to the splitting/combining devices shown in Figures 1-8. Like the filter devices 603,613, the filter devices 605, 615 are bi-directional, that is, in one direction they receive the combined Ethernet and telephony signal and the CATV signal and transmit the combined Ethernet and telephony and CATV signal and in the other direction it receives a combined Ethernet and telephony and CATV signal and splits it into a combined Ethernet and telephony signal and a CATV signal.

The combination made in the CATV-Ethernet filter devices 605, 615 can also be made by means of passive filters as described above. The combination of three signals as made in this application is of course particularly favourable, since it enables an even more optimized use of cable resources.

Of course, the filter devices 603, 605 and 613, 615, respectively, could be implemented in one unit, even though in Figure 2 they are shown as two separate units for clarity.

## Claims

1. An apparatus for the combination and/or splitting of CATV signals and data signals **characterized in that** it comprises a first terminal (251) adapted to receive a CATV signal, a second input/output terminal (253) adapted to receive and transmit a Ethernet signal and a third input/output terminal (255) adapted to receive and transmit a combined signal comprising a CATV signal and a baseband Ethernet signal, a high-pass filter (257) on the first input/output terminal (251), a low-pass filter (259) on the second input/output terminal (253) and a combining unit (261) connected to the high-pass filter (257), the low-pass filter (259) and the third input/output terminal (255).

2. An apparatus according to claim 1, further comprising an impedance converting unit connected between the second input/output terminal and the low-pass filter.

3. An apparatus according to claim 1 or 2, further comprising a balun (263) connected between the second input/output terminal and the low-pass filter.

4. An apparatus according to any one of the claims 1-3, wherein the cut-off frequencies of the filters (257, 259) are substantially between 30 and 40 MHz.

5. An apparatus according to any one of the claims 1-4, wherein the impedance on the first input/output terminal (251) is substantially 75Ω and the impedance on the second input/output terminal (253) is substantially 50Ω.

6. An apparatus according to any one of the claims 1-5, adapted for bidirectional traffic.

7. An apparatus according to any one of the claims 1-6, further comprising filter means for combining a received baseband Ethernet subsignal and a received telephony subsignal to achieve the received baseband Ethernet signal, and for splitting the transmitted baseband Ethernet signal to a baseband Ethernet subsignal and a telephony subsignal.
